# EUROPÄISCHE PATENTANMELDUNG

(11) **EP 3 805 429 A1**
(43) Veröffentlichungstag der Anmeldung: **14.04.2021**
(21) Anmeldenummer: 19201889.3
(22) Anmeldetag: 08.10.2019
(51) Int. Cl.: C25B 1/26, C25B 3/12, C25B 9/06, C25B 9/20, C25B 3/10, C25B 1/00

(54) **VERFAHREN UND ELEKTROLYSEVORRICHTUNG ZUR HERSTELLUNG VON CHLOR, KOHLENMONOXID UND GEGEBENENFALLS WASSERSTOFF**

(71) Anmelder: Covestro Deutschland AG, 51373 Leverkusen (DE)
(72) Erfinder: BULAN, Andreas, 40764 Langenfeld (DE); KINTRUP, Jürgen, 51373 Leverkusen (DE); LUEKEN, Alexander, 41564 Kaarst (DE)
(74) Vertreter: Levpat

(57) **Zusammenfassung**

Es wird ein Verfahren und eine Elektrolysevorrichtung zur Herstellung von Chlor, Kohlenmonoxid und gegebenenfalls Wasserstoff durch elektrochemische Umsetzung von Kohlendioxid und Alkalichloridlösung beschrieben, bei der das Kohlendioxid aus einer Kohlendioxidgasquelle (55) an einer Gasdiffusionselektrode als Kathode (11) in einer wässrigen Alkalichlorid-haltigen Lösung als Katholyt (17) elektrochemisch reduziert und gleichzeitig Chlor aus einer wässrigen Alkalichlorid-haltigen Lösung als Anolyt (15a) anodisch erzeugt wird

## Beschreibung

Die Erfindung betrifft ein Verfahren und eine Elektrolyseeinrichtung zur Herstellung von Chlor, Kohlenmonoxid (CO) und gegebenenfalls Wasserstoff durch elektrochemische Umsetzung von Kohlendioxid (CO₂) und Alkalichloridlösung.

Es wird insbesondere ein Verfahren zur nachhaltigen Herstellung von Rohstoffen für die Isocyanatproduktion sowie eine Elektrolysevorrichtung und deren Betrieb zur gleichzeitigen Herstellung von Kohlenmonoxid und Chlor und ggf. Wasserstoff und dem Recycling von Chlorwasserstoff als Nebenprodukt aus der Isocyanatproduktion beschrieben.

Die Herstellung der Grundchemikalien Kohlenmonoxid bzw. Synthesegas, bestehend aus Kohlenmonoxid und Wasserstoff, erfolgt derzeit üblicherweise aus fossilen Rohstoffen. Aufgrund der Verknappung der fossilen Rohstoffe und der mit der Herstellung von Kohlenmonoxid verbundenen CO₂ Emission, sind nachhaltige Synthesewege notwendig, einerseits um die fossilen Ressourcen wie Erdgas oder Erdöl zu schonen und andererseits um die spätestens bei der Entsorgung der aus besagten Grundchemikalien hergestellten Produkte durch Verbrennung erzeugten CO₂ Emissionen und die daraus resultierende globale Erderwärmung zu vermeiden.

Weiterhin ist es vorteilhaft CO₂ aus anderen Quellen als Rohstoff für die Synthese einzusetzen. Dies vermeidet die Freisetzung von CO₂ aus verschiedenen Prozessen, z.B. der Stahlerzeugung oder der Müllverbrennung. Dadurch könnte der Anstieg der globalen Erwärmung durch CO₂-Emission aus solchen CO₂ Quellen verlangsamt werden.

Durch Nutzung von regenerativ erzeugter Energie, z.B. elektrischem Strom aus Windenergie-, Wasserkraft- oder Solarkraftwerken besonders in Kombination mit der Nutzung von CO₂ als chemischem Rohstoff stellt das nachstehend beschriebene bevorzugte neue Verfahren ein besonders nachhaltiges Verfahren zur Herstellung von Isocyanaten dar.

Somit sind Elektrolyseverfahren besonders geeignet, Grundchemikalien wie CO nachhaltig herzustellen.

Da die Grundchemikalien für die Kunststoffproduktion typischerweise im 1000 Tonnen-Maßstab hergestellt werden, müssen die Elektrolyseverfahren zur Herstellung von Grundchemikalien auch im großtechnischen industriellen Maßstab (1000t/a) entwickelt werden. Um mit Elektrolyseverfahren großtechnischen Mengen an Produkt herzustellen, sind großflächige Elektrolysezellen und Elektrolyseure mit einer großen Anzahl von Elektrolysezellen notwendig. Unter technischen Produktionsmengen sind hier und im weiteren Produktmengen mit mehr als 0,1 kg/(h^{∗}m²) je Elektrolysezelle zu verstehen. Hierzu werden üblicherweise, wie aus der Chlor-Alkali-Elektrolyse bekannt, Elektrolysezellen mit einer Elektrodenfläche von mehr als 2m² je Elektrolysezelle eingesetzt. Die Elektrolysezellen werden in Gruppen von bis zu 100 Stücke in einem Elektrolysegestell zusammengefasst. Mehrere Gestelle bilden dann einen Elektrolyseur. Die Kapazität eines industriellen Elektrolyseurs beträgt derzeit bis zu 30.000 t/a an Chlor und den jeweiligen Äquivalenten an Natronlauge bzw. Wasserstoff.

Die Nutzung einer Gasdiffusionselektrode (GDE) für die kathodische Reduktion von Sauerstoff ist für die Durchführung einer Chlor-Alkali-Elektrolyse bereits bekannt.

Großtechnische Verfahren zur elektrochemischen Reduktion von CO₂ sind aber derzeit nicht bekannt, ebenfalls nicht die Kombination aus elektrochemischer Reduktion von CO₂ zu CO und der gleichzeitigen Herstellung von Chlor.

Üblicherweise fällt bei der Herstellung von Isocyanaten Chlorwasserstoff an, der durch Gasphasenoxidation mit Sauerstoff wieder zu Chlor rezykliert werden kann oder nach Absorption in Wasser zu Salzsäure umgesetzt und durch Elektrolyse zu Chlor und Wasserstoff oder zu Chlor und Wasser umgesetzt werden kann.

Üblicherweise wird derzeit Kohlenmonoxid aus fossilen Rohstoffen wie Erdgas oder Kohle hergestellt.

Grundsätzlich bekannt sind Elektrolyseprozesse unter Einsatz von CO₂ als Rohstoff, dessen elektrochemische Reduktion CO liefert. Nachteilig wirkt sich hierbei aus, dass bei den Elektrolyseprozessen hydrogencarbonathaltige Elektrolyte eingesetzt werden, eine hohe überstöchiometrische Menge an CO₂ zugeführt wird und dadurch ein großer Trennaufwand zur Abtrennung von Kohlendioxid aus den erzeugten Gasgemischen, bzw. aus dem Elektrolyten notwendig ist. Weiterhin wird in bekannten Prozessen an der Anode Sauerstoff oder eine Sauerstoff CO₂-Gasmischung erzeugt, die aufwändig getrennt werden muss. Dieses CO₂ entweicht mit dem O₂ und muss ersetzt werden, welches sich nachteilig auf die Wirtschaftlichkeit solcher bekannter Verfahren auswirkt.

Weiterhin ist die elektrische Leitfähigkeit von carbonathaltigen Elektrolyten vergleichsweise niedrig, woraus eine hohe Elektrolysespannung für die CO₂-Elektrolyse resultiert. Durch den hohen elektrischen Energieverbrauch wird die Wirtschaftlichkeit eines solchen Verfahrens weiter stark beeinträchtigt.

Weiterhin kann für das weitere Produkt Sauerstoff aus der bekannten CO₂-Elektrolyse vielfach keine sinnvolle technische Verwertung gefunden werden, wodurch die eingebrachte Energie für die Elektrolyse nicht effizient genutzt werden kann.

Weiterhin ist bekannt, dass die anodische Erzeugung von Sauerstoff mit hoher Überspannung erfolgt, welches die Effizienz des bekannten Verfahrens auch negativ beeinflusst. Ebenso entstehen an der Anode bei der Sauerstoffentwicklung Protonen, die aus dem carbonathaltigen Elektrolyten CO₂ austreiben können. Dieses CO₂ stört zum einen die Elektrolyse dadurch, dass die CO₂ Gasblasen die Leitfähigkeit des Elektrolyten verschlechtern und sich auf der Oberfläche der Anode sammeln und den Zutritt von Elektrolyt behindern. Beides führt zu höheren Zellspannungen. Weiterhin muss das gebildete CO₂ aus dem O₂ abgetrennt werden, wenn der Sauerstoff weiter verwendet werden soll. Das ausgetriebene CO₂ muss jedoch wieder rezykliert werden, damit die Nachhaltigkeit einer solchen Verfahrensweise gegeben ist. Der Verlust von CO₂ muss generell vermieden werden, da es sich um einen teilweise aufwändig bereit zu stellenden Rohstoff handelt.

Aufgabe war es, ein Verfahren bereitzustellen, welches die oben genannten Nachteile bekannter Verfahrensweisen nicht aufweist.

Gegenstand der Erfindung ist ein Verfahren zu Herstellung von Chlor, Kohlenmonoxid und ggf. Wasserstoff durch elektrochemische Umsetzung von Kohlendioxid und Alkalichloridlösung, dadurch gekennzeichnet, dass das Kohlendioxid an einer Gasdiffusionselektrode als Kathode in einer wässrigen Alkalichlorid-haltigen Lösung als Katholyt elektrochemisch reduziert und gleichzeitig Chlor aus einer wässrigen Alkalichlorid-haltigen Lösung als Anolyt anodisch erzeugt wird, wobei das im Katholyt gebildete Alkalisalz der Kohlensäure, ausgewählt aus Alkalicarbonat, Alkalihydrogencarbonat oder Mischungen daraus anschließend mit Chlorwasserstoff zu Kohlendioxid und Alkalichlorid umgesetzt wird und das hierbei freigesetzte Kohlendioxid in den Kathodenraum zur Gasdiffusionselektrode und das erzeugte Alkalichlorid wahlweise in den Anodenraum und/oder in den Kathodenraum zurückgeführt werden.

Bei dem erfindungsgemäßen Verfahren, wird ein Alkalichlorid-haltiger Elektrolyt eingesetzt, sowohl im Anoden- als auch im Kathodenraum. Unter Alkalichlorid wird insbesondere Natrium- oder Kaliumchlorid, ggf. auch Cäsiumchlorid verstanden. Besonders bevorzugt wird Kaliumchlorid eingesetzt. An der Anode wird aus dem Alkalichlorid-haltigen Elektrolyten Chlor-Gas erzeugt und gleichzeitig an der Kathode CO₂ zu Kohlenmonoxid reduziert und ggf. Wasserstoff erzeugt.

Vorteil des neuen Verfahrens ist, dass an der Anode kein Sauerstoff bzw. Sauerstoff / CO₂ Gemisch entsteht sondern Chlor in hoher Reinheit, so wie es aus der Chlor-Alkali-Elektrolyse grundsätzlich bekannt ist.

Die CO₂ Reduktion erfolgt dabei ebenfalls aus Alkalichlorid-haltigem Elektrolyten. Der große Vorteil liegt gegenüber den carbonat- bzw. hydrogencarbonathaltigen Elektrolytsystemen darin, dass zum einen eine höhere Leitfähigkeit des Elektrolyten vorliegt und an der Anode kein CO₂ Gas freigesetzt wird, welches den Elektrolyseprozess stört, also zu höheren Elektrolysespannungen führt und welches aus dem Anodengas wieder abgetrennt werden muss.

Die bei der CO₂ Reduktion an der Kathode anfallenden Hydroxid-Ionen reagieren jedoch mit dem der Kathode zugeführten Kohlendioxid zu Alkalisalz der Kohlensäure, ausgewählt aus Alkalicarbonat, Alkalihydrogencarbonat oder Mischungen daraus. Das gebildete Alkalisalz der Kohlensäure liegt im Katholyten in gelöster Form vor. Die Prozessparameter werden insbesondere dabei so ausgelegt, dass im wesentlichen Alkalicarbonat entsteht, z.B. durch den Betrieb der CO₂-Elektrolyse bei erhöhter Temperatur. Die hat den Vorteil der höheren Löslichkeit und vermeidet Kristallisation von Alkalihydrogencarbonat oder Alkalicarbonat in den Poren der Gasdiffusionselektrode.

Wichtig für ein bevorzugtes Verfahren ist also insbesondere die Temperaturführung der Elektrolyte, insbesondere bevorzugt die Temperatur des Katholyten. Die Temperaturführung wird bevorzugt so gewählt, dass die Temperatur des Katholyts im Zulauf zur mindestens einen Elektrolysezelle der Elektrolysevorrichtung mindestens 60°C, insbesondere vorzugweise mindestens 70°C beträgt. Dies erhöht zusätzlich die Leitfähigkeit der Elektrolyte und erniedrigt die Elektrolysespannung, wodurch der Prozess noch wirtschaftlicher durchgeführt werden kann.

In der bevorzugten Ausführung der Erfindung beträgt daher die Temperatur des Katholyten im Zulauf zur elektrochemischen Umsetzung mindestens 60°C, insbesondere vorzugweise mindestens 70°C.

Die elektrochemische Umsetzung von Kohlendioxid und Katholyt, insbesondere Alkalichloridlösung an der Kathode erfolgt insbesondere so dass das Kohlendioxidgas an einer Gasdiffusionselektrode als Kathode in Gegenwart von Katholyt elektrochemisch reduziert wird und der besagte Katholyt nach dem Prinzip eines fallenden Flüssigkeitsfilms entlang der Oberfläche der Gasdiffusionselektrode geführt wird.

Das Prinzip des fallenden Flüssigkeitsfilms (meist auch: Fallfilm genannt) besagt, dass eine Flüssigkeit, hier z.B. der Katholyt, im Wesentlichen durch Einwirkung der Gravitation bewegter Film ausgestaltet ist. Dabei wird bevorzugt die Flüssigkeit als Film innerhalb eines als Elektrolytraum fungierenden Spalts zwischen zwei parallel angeordneten Flächen geführt. Im Rahmen dieser bevorzugten Ausführungsform der vorliegenden Erfindung bildet eine dieser Flächen eine Gasdiffusionselektrode, entlang deren dem Spalt zugewandten flächigen Elektrodenseite der fallende Flüssigkeitsfilm geführt wird und die andere Fläche ein flächiger Seperator, insbesondere eine Membran (bevorzugt eine Ionenaustauschermembran oder ein Diaphragma).

Der Katholyt wird weiter bevorzugt als fallender Flüssigkeitsfilm entlang der Elektrodenfläche der Gasdiffusionselektrode geführt, wobei die Strömungsgeschwindigkeit des fallenden Flüssigkeitsfilms durch ein Mittel zur Strömungsbremsung reguliert werden kann.

Besondere Vorteile erhält man durch die Kopplung des neuen Verfahrens mit anderen industriellen chemischen Herstellungsprozessen in denen Chlor als Edukt benötigt wird und Chlorwasserstoff als Nebenprodukt anfällt. Beispiele solcher chemischen Prozesse sind die Herstellung von Isocyanaten oder von Polyvinylchlorid.

Eine bevorzugte Ausführung des neuen Verfahrens ist folglich dadurch gekennzeichnet, dass der Chlorwasserstoff einem angeschlossenen Prozess zur Herstellung von Isocyanaten über Phosgen als Zwischenprodukt entnommen wird und das bei der elektrochemischen Umsetzung gebildete Chlor in die Phosgenerzeugung als Vorstufe zur Isocyanatproduktion zurückgeführt wird.

Der als optionales Nebenprodukt der elektrochemischen Umsetzung im neuen Verfahren zusammen mit CO gebildete Wasserstoff wird in einer bevorzugten Ausführung des neuen Verfahrens von der Mischung aus Wasserstoff, CO und CO₂ abgetrennt und verwertet.

Der Wasserstoff wird ganz besonders bevorzugt zur Herstellung von Diaminen aus entsprechenden Di-Nitroverbindungen als Vorstufe für den Isocyanatherstellungsprozess verwertet.

Eine weitere bevorzugte Ausführung des neuen Verfahren ist dadurch gekennzeichnet, dass Konzentration der Alkalichloridlösung des Anolyten und/oder des Katholyten unabhängig voneinander bis 25 Gew.-%, bevorzugt von 15 bis 25 Gew.-% beträgt.

In dem neuen Verfahren wird beim Betrieb im technischen Maßstab (d. h. bei einem Umsatz von mindestens 0,1 CO₂ kg / (h^{∗}m²) (d.h. von mindestens 0,1 kg CO₂ pro Stunde und pro Quadratmeter Elektrodenfläche) die elektrochemische Umsetzung von CO₂ nach dem Membranelektrolyseverfahren an einer Gasdiffusionselektrode als Kathode durchgeführt.

In dieser bevorzugten Variante des neuen Verfahrens erfolgt die Zuleitung des CO₂ zur Gasdiffusionselektrode über einen Gasraum, der durch die Gasdiffusionselektrode vom Elektrolytraum abgetrennt ist.

Die Gasgeschwindigkeit im Gasraum nahe der Rückseite der Gasdiffusionselektrode beträgt in einer besonders bevorzugten Ausführung der vorgenannten Verfahrensweise von 0,001 bis 15 m/s, bevorzugt von 0,01 bis 10 m/s.

Das bevorzugte Verfahren mit Gasdiffusionselektrode ist ferner unabhängig dadurch gekennzeichnet, dass Driftgeschwindigkeit des Katholyts im Zwischenraum zwischen Ionenaustauschermembran und Gasdiffusionselektrode von 0,8 bis 10 cm/s beträgt.

Die elektrochemische Umsetzung von CO₂ in einer Elektrolysevorrichtung erfolgt wie oben beschrieben an einer Gasdiffusionselektrode, die als Kathode geschaltet ist und nach der beispielhaft im Folgenden genannten Reaktion abläuft:

CO₂ + H₂O + 2e⁻ → CO + 2OH⁻

In einer Nebenreaktion kann neben dem nach der vorstehenden Gleichung gebildeten Kohlenmonoxid auch Wasserstoff erzeugt werden.

An der Anode wird an handelsüblichen aus der Chlor-Alkali-Elektrolyse bekannten Anoden, bevorzugt an Anoden aus Titan, die eine Ruthenium-, Titan,- oder Iridiumoxid Beschichtung tragen (z.B. DSA-Coating, der Fa. Denora, Deutschland) aus einer wässrigen Alkalichlorid Lösung Chlor entwickelt.

Für die elektrochemische Umsetzung von CO₂ im Produktionsmaßstab wird insbesondere eine großflächige Gasdiffusionselektrode eingesetzt und für den Betrieb der Gasdiffusionselektrode eine Zellkonstruktion in technischer Größe verwendet, wobei für den Betrieb in technischen Elektrolysevorrichtungen unter Umständen besondere Maßnahmen getroffen werden müssen.

So ist bei der technischen Nutzung von Gasdiffusionselektroden (GDE) zu beachten, dass Gasdiffusionselektroden eine offenporige Struktur aufweisen und zwischen Elektrolytraum und Gasraum eingebaut werden. Die Struktur der GDE muss es ermöglichen, dass die Reaktion des Eduktgases (hier CO₂) an der Dreiphasengrenze zwischen Elektrolyt, Katalysator und Gas möglichst nahe zum Elektrolyten hin erfolgt. Diese Grenzschicht wird durch die Hydrophobie des GDE Materials stabilisiert. Es zeigt sich jedoch, dass diese Stabilisierung, die alleine durch die Oberflächenspannung des Elektrolyten erfolgt, nur ein endliches Druckgefälle zwischen Gasseite und Flüssigkeitsseite der GDE zulässt. Ist der gasseitige Druck zu hoch, so bricht schließlich das Gas durch die GDE hindurch und die GDE wird in diesem Bereich in ihrer Funktion gestört, d.h. der der Elektrolysevorgang wird hier lokal unterbrochen. Ist andererseits der Flüssigkeitsdruck zu hoch, so wird die Dreiphasengrenze aus dem Katalysatorbereich der GDE soweit verschoben, bis die GDE mit Elektrolyt geflutet ist und bei weiterer Druckerhöhung zu einem Flüssigkeitsdurchbruch von Elektrolyt in den Gasraum führt. Hierdurch wird ebenfalls die Funktion der GDE gestört.

Bei senkrechter Elektrodenanordnung, die bei technisch durchgeführten Elektrolysen sinnvollerweise angewendet wird, führt dies zu einer Begrenzung der Bauhöhe der Zell-Elemente aufgrund der Unzulänglichkeit von bekannten Gasdiffusionselektroden mit zu hohem Gasdruck oder Flüssigkeitsdruck betrieben zu werden. Technische Bauhöhen bei senkrechter GDE-Anordnung betragen insbesondere mehr als 30 cm, üblicherweise 100 bis 150 cm. Hier würde bereits bei einer Bauhöhe von mehr als 10 cm im oberen Bereich des Elektrolyseures Gas aus dem Gasraum in den Kathoden-Elektrolytspalt zwischen GDE und Membran eindringen. Die technisch realisierbare Bauhöhe bliebe deshalb auf ca. 20 bis 30 cm beschränkt, was für die heute marktüblichen Elektrolyseurkonstruktionen keine technisch wirtschaftliche Nutzung erlaubt.

Für die technische elektrochemische Reduktion von CO₂ sind bisher noch keine Zellkonzepte verfügbar. Versuche werden derzeit nur im kleinen Laborzellenmaßstab durchgeführt, wobei die Bauhöhe weniger als 10 cm beträgt und somit das Problem der Bauhöhe und des Differenzdrucks zwischen dem Gasraum und dem Elektrolytraum noch keine Rolle spielen.

Besondere Aufgabe der vorliegenden Erfindung war es daher auch, das neue Elektrolyseverfahren mit einer Gasdiffusionselektrode zu betreiben, bei dem an der GDE CO₂ im technischen Maßstab umgesetzt wird. Unter technischem Maßstab sind dabei Produktionsmengen zu verstehen, sodass elektrochemisch mehr als 0,1 CO₂ kg / (h^{∗}m²) umgesetzt werden.

Wie oben bereits erwähnt unterscheidet sich die elektrochemische CO₂ Reduktion zu CO bzw. zu CO/H₂ Gemischen grundlegend von der elektrochemischen O₂ Reduktion. Bei der O₂ Reduktion werden aus dem Sauerstoff-Gas Hydroxid-Ionen gebildet, somit findet bei der Reaktion eine Volumenverminderung statt. Die GDE verbraucht den Sauerstoff, wodurch eine Verringerung des Partialdrucks entsteht. Bei der CO₂ Reduktion zu CO entsteht jedoch die äquimolare Gasmenge an Produkt (CO bzw. CO/H₂ Gemisch) aus dem CO₂ Gas und dem Katholyt, und es findet keine Verringerung des Partialdrucks statt. Dies bedarf unter Umständen einer speziellen Betriebsweise insbesondere auf der Kathodenseite der Elektrolysezelle. Diese speziellen Betriebsweisen werden in der unveröffentlichen Patentanmeldung PCT/EP2019/073789 CO₂ Elektrolyseure beschrieben. Hierzu zählen die unten an der Kathodenhalbschale liegende Gaszuführung (5) und die oben an der Kathodenhalbschale liegende Gasabführung (6) welche des Gasraum (4) der Kathode ver- und entsorgen. Dies vermeidet die Akkumulation des Nebenproduktes Wasserstoff oder CO, welche eine geringere Dichte als CO₂ aufweisen. Weiterhin ist eine hohe Gasgeschwindigkeit und eine definierte Elektrolytgeschwindigkeit einzustellen um eine gute Performance zu erreichen.

Bisher sind auch keine technischen Elektrolyseverfahren und Elektrolysevorrichtungen bekannt, mit denen großtechnische Mengen an CO aus CO₂ in Kombination mit der Herstellung von Chlor herstellbar sind.

Ein weiterer Gegenstand der Erfindung ist daher eine Elektrolysevorrichtung zur elektrochemischen Umsetzung von Kohlendioxid und Alkalichloridlösung, insbesondere nach dem zuvor beschriebenen erfindungsgemäßen Verfahren, mindestens umfassend
(i) mindestens eine Kohlendioxidgasquelle und
(ii) mindestens eine Elektrolysezelle, wenigstens umfassend
   eine Kathodenhalbschale mit einer Kathode, einem Katholytzulauf, einem Katholytablauf und mit einem Gasraum, der über eine erste Gaszuleitung mit der Kohlendioxidgasquelle in Fluidverbindung steht und der mit einer Gasableitung für gasförmiges Reaktionsprodukt enthaltendes Gas, insbesondere für ein Gas enthaltend Kohlenmonoxid, unverbrauchtes Kohlendioxidgas und gegebenenfalls Wasserstoff, verbunden ist,
   weiter umfassend eine Anodenhalbschale, wobei die Anodenhalbschale mindestens mit einer zweiten Gasableitung für das Anodenreaktionspodukt, insbesondere Chlor und gegebenenfalls Sauerstoff, einem Anolytzulauf für die Einleitung einer wässrigen Alkalichlorid-haltigen Lösung als Anolyt und einem Anolytablauf sowie einer Anode versehen ist, und
   einen zwischen Anodenhalbschale und Kathodenhalbschale angeordneten Separator zur Trennung von Anodenraum und Kathodenraum,
   weiter umfassend elektrische Stromleitungen zur Verbindung von Anode und Kathode mit einer Gleichspannungsquelle,
   wobei die Kathode als Gasdiffusionselektrode zur Umsetzung von Kohlendioxidgas ausgebildet ist und Kathode, Anode und der Separator mit ihrer Hauptausdehnung vertikal angeordnet sind, und zwischen Separator und Kathode ein Spalt als Elektrolytraum zur Durchleitung des Katholyts nach dem Prinzip eines fallenden Flüssigkeitsfilms angeordnet ist.

Der Separator in der neuen Elektrolysevorrichtung ist bevorzugt eine Ionenaustauschermembran oder ein Diaphragma, besonders bevorzugt eine Ionenaustauschermembran.

Eine bevorzugte Ausführung der neuen Elektrolysevorrichtung ist dadurch gekennzeichnet, dass die vertikale Hauptausdehnung der Kathode mindestens 30 cm, bevorzugt mindestens 60 cm, besonders bevorzugt mindestens 100 cm beträgt.

Die Kathode ist eine zur Umsetzung von Kohlendioxidgas ausgebildete Gasdiffusionselektrode.

In einer bevorzugten Ausführung der neuen Elektrolysevorrichtung ist die in der mindestens einen Elektrolysezelle enthaltene Kathode als Gasdiffusionselektrode auf Basis von Silber und/oder Silberoxid, bevorzugt Silberpartikeln, als Elektrokatalysator und mit einem pulverförmigen Fluorpolymer, insbesondere PTFE Pulver, als nichtleitendem Bindemittel auf einem metallischen oder nichtmetallischen, einem leitfähigen oder einem nichtleitfähigen Träger kompaktiert ausgebildet. Als Gasdiffusionselektrode (GDE) wird für die CO₂ zu CO Reduktion besonders bevorzugt eine silberbasierte GDE in Analogie zu der in der EP2398101 beschriebenen Elektrode mit der nachfolgend dargestellten Variation eingesetzt.

Die Porosität der katalytisch aktiven Schicht, gerechnet aus Materialdichten der eingesetzten Rohstoffe beträgt dabei insbesondere mehr als 10%, jedoch weniger als 80%.

Die GDE wird speziell beispielhaft wie folgt hergestellt:
3,5 kg einer Pulvermischung, bestehend aus 5 Gew.% PTFE-Pulver, 88 Gew.% Silber-I-Oxid und 7 Gew.% Silberpulver (z.B. Typ 331 der Fa. Ferro), wurden in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55 °C nicht überstieg. Insgesamt wurde das Mischen dreimal bei einer Mischzeit von 50 Sekunden und dreimal bei einer Mischzeit von 60 Sekunden durchgeführt. Nach dem Mischen wurde die Pulvermischung mit einem Sieb mit einer Maschenweite von 1,0 mm gesiebt. Die gesiebte Pulvermischung wurde anschließend auf ein elektrisch leitfähiges Trägerelement aufgebracht. Das Trägerelement war ein Drahtnetz aus Silber mit einer Drahtdicke von 0,14 mm und einer Maschenweite von 0,5 mm. Das Aufbringen erfolgte mit Hilfe einer 2 mm dicken Schablone, wobei das Pulver mit einem Sieb mit einer Maschenweite von 1,0 mm aufgebracht wurde. Überschüssiges Pulver, das über die Dicke der Schablone hinausragte, wurde mittels eines Abstreifers entfernt. Nach Entfernung der Schablone wird der Träger mit der aufgebrachten Pulvermischung mittels einer Walzenpresse mit einer Presskraft von 0,45 kN/cm verpresst. Der Walzenpresse wurde die Gasdiffusionselektrode entnommen. Die Gasdiffusionselektrode hatte eine Porosität von etwa 50 %.

Die Elektrolysevorrichtung ist bevorzugt derart ausgebildet, dass die zur Kathode führende Gaszuleitung des Kohlendioxidgases eine Vorrichtung zur Regulierung der Strömungsgeschwindigkeit, z. B. ein Regelventil, umfasst, die die Geschwindigkeit des Kohlendioxidgases im Gasraum regelt. Die über diese Vorrichtung regulierte Gasgeschwindigkeit im Gasraum nahe der Rückseite der Gasdiffusionselektrode beträgt in einer besonders bevorzugten Ausführung der vorgenannten Elektrolysevorrichtung von 0,001 bis 15 m/s, bevorzugt von 0,01 bis 10 m/s.

Die Elektrolysevorrichtung ist bevorzugt derart ausgebildet, dass die Driftgeschwindigkeit des fallenden Flüssigkeitsfilms des Katholyten durch ein Mittel zur Strömungsbremsung reguliert wird. Dabei ist es besonders bevorzugt, wenn im Spalt ein Mittel zur Strömungsbremsung des Katholytstroms vorgesehen ist, wobei bevorzugt das Mittel zur Strömungsbremsung als elektrisch nicht leitendes, chemisch inertes textiles Flächengebilde ausgebildet ist.

Die über ein Mittel zur Strömungsbremsung regulierte Driftgeschwindigkeit des Katholyts im Zwischenraum zwischen Separator und Gasdiffusionselektrode beträgt in einer besonders bevorzugten Elektrolysevorrichtung von 0,8 bis 10 cm/s.

Ganz besonders bevorzugt ist die Elektrolysevorrichtung derart ausgebildet, dass die zur Kathode führende Gaszuleitung des Kohlendioxidgases eine Vorrichtung zur Regulierung der Strömungsgeschwindigkeit umfasst, die die Geschwindigkeit des Kohlendioxidgases im Gasraum regelt und dass zusätzlich dazu im Spalt ein Mittel zur Strömungsbremsung des Katholytstroms vorgesehen ist, wobei bevorzugt das Mittel zur Strömungsbremsung als elektrisch nicht leitendes, chemisch inertes textiles Flächengebilde ausgebildet ist. Dabei sind jeweils die zuvor genannten bevorzugten Werte für die jeweiligen Geschwindigkeiten besonders bevorzugt.

Ganz besonders bevorzugt ist die in der mindestens einen Elektrolysezelle der Elektrolysevorrichtung enthaltene Kathode als Gasdiffusionselektrode auf Basis von Silber und/oder Silberoxid, bevorzugt Silberpartikeln, als Elektrokatalysator und mit einem pulverförmigen Fluorpolymer, insbesondere PTFE Pulver, als nichtleitendem Bindemittel auf einem metallischen oder nichtmetallischen, einem leitfähigen oder einem nichtleitfähigen Träger kompaktiert ausgebildet, wobei die zur Kathode führende Gaszuleitung des Kohlendioxidgases eine Vorrichtung zur Regulierung der Strömungsgeschwindigkeit umfasst, die die Geschwindigkeit des Kohlendioxidgases im Gasraum regelt und wobei zusätzlich dazu im Spalt ein Mittel zur Strömungsbremsung des Katholytstroms vorgesehen ist, wobei bevorzugt das Mittel zur Strömungsbremsung als elektrisch nicht leitendes, inertes textiles Flächengebilde ausgebildet ist. Dabei sind jeweils die zuvor genannten bevorzugten Werte für die jeweiligen Geschwindigkeiten besonders bevorzugt.

Enthält ein Elektrolyseur mehrere Elektoslysezellen, so werden die Elektrolysezellen bevorzugt in einer bipolaren Anordnung eingebaut, so dass nur das jeweilige Endelement mit einem Stromanschluss versehen wird. Bipolare Anordnung bedeutet, dass eine Anodenhalbschale mit einer Kathodenhalbschale in Kontakt steht. Der Kontakt erfolgt dabei über die metallische Rückwand der Halbschalen. Eine monopolare Anordnung mehrerer Elektrolysezellen in einem Elektrolyseur ist ebenfalls denkbar, hier verfügt jedes Element über einen separaten Stromanschluss, die Anodenhalbschale wird mit dem Pluspol des Gleichrichters und die Kathodenhalbschale mit dem Minuspol des Gleichrichters verbunden.

Die durch die Elektrolyse gebildeten Reaktionsprodukte können jeweils als Anodenreaktionsprodukt und als Kathodenreaktionsprodukt durch die dafür vorgesehenen, zuvor definierten Gasableitungen aus der Elektrolysezelle der Elektrolysevorrichtung entnommen werden.

Bevorzugt ist die erste Gasableitung in der neuen Elektrolysevorrichtung am oberen Ende des Gasraums und die zweite Gasableitung am oberen Ende des Anodenraums angeschlossen und die erste Gaszuleitung am unteren Ende des Gasraums angeschlossen.

Eine weitere bevorzugte Ausführung der neuen Elektrolysevorrichtung ist dadurch gekennzeichnet, dass die zweite Gasableitung für das Anodenreaktionsprodukt über eine Sammelrohrleitung und ggf. über eine Cl₂-Gastrocknung mit einer zweiten Gastrenneinheit zur Abtrennung von Sauerstoff aus Chlor aus dem Anodengas verbunden ist.

In einer weiteren bevorzugten Ausführungsart der neuen Elektrolysevorrichtung ist die erste Gasableitung, insbesondere über eine Sammelleitung, mit einer ersten Gastrenneinheit zur Trennung von Kohlenmonoxid, Wasserstoff und unverbrauchtem Kohlendioxidgas verbunden.

In einer weiteren bevorzugten Ausführungsart der neuen Elektrolysevorrichtung ist die erste Gastrenneinheit eine Rückführungsleitung für abgetrenntes Kohlendioxidgas aufweist, die insbesondere über eine Verteilerrohrleitung mit der ersten Gaszuleitung für Kohlendioxidgas verbunden.

In einer besonders bevorzugten Ausführungsart der zuvor beschriebenen neuen Elektrolysevorrichtung weist die Gastrenneinheit eine Ableitung für abgetrenntes Kohlenmonoxid auf, die mit einer chemischen Produktionsanlage zur chemischen Umsetzung von Kohlenmonoxid und Chlor zu Phosgen verbunden ist.

Eine besonders bevorzugte Ausführung der neuen Elektrolysevorrichtung ist dadurch gekennzeichnet, dass der Katholytablauf und der Anolytablauf direkt oder indirekt über Rohrleitungen mit einem Elektrolytsammler verbunden sind, der Elektrolytsammler über Rohrleitung mit einer Carbonatzersetzungseinheit und die Carbonatzersetzungseinheit mindestens mit einer Rückführung für abgespaltenes Kohlendioxid, einem regelbaren Zulauf für Chlorwasserstoff und einer Rückführungsleitung für Elektrolyt versehen ist und die Rückführungsleitung sowohl mit dem Katholytzulauf als auch mit dem Anolytzulauf verbunden ist.

Das erfindungsgemäße Verfahren ermöglicht einen bevorzugten Prozess zur nachhaltigen Herstellung von Isocyanaten durch elektrochemische Reduktion von CO₂ zu CO und gleichzeitiges Rezyklieren von Chlorwasserstoff zu Chlor. ein optionaler Einsatz von elektrischer Energie aus nachhaltig erzeugtem Strom wird spezieller und beispielhaft wie folgt beschrieben.

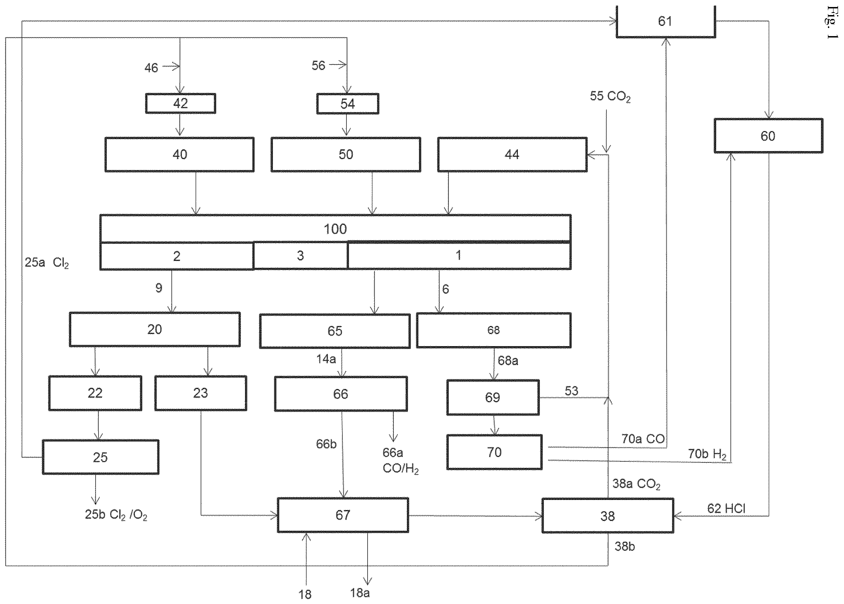

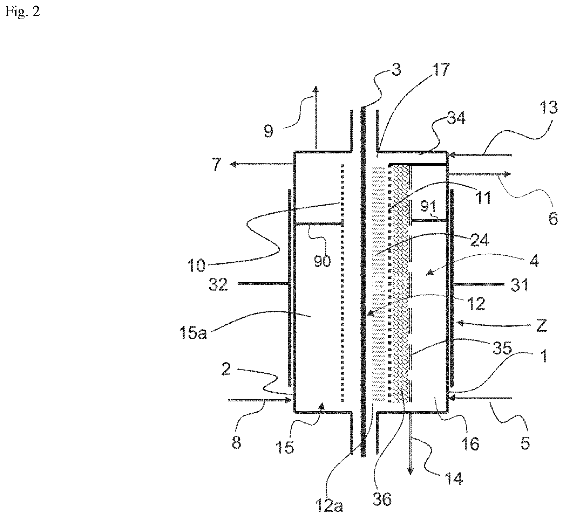

Hierzu wird ein Elektrolyseur (siehe Fig. 1, Elektrolyseur 100) mit einer Anzahl von 80 bis 100 Elektrolysezellen (siehe Fig.l, Elektrolysezellen (Z)) je Elektrolyseurgestell ausgerüstet. Eine Elektrolysezelle weist dabei mindestens eine Anodenhalbschale und eine Kathodenhalbschale, Anode und Kathode sowie Edukt- und Produktleitungen und Stromanschlüsse auf (wie bevorzugt in Fig. 2 schematisch im Querschnitt dargestellt). Die Elektrolysezellen werden dabei in einer bipolaren Anordnung eingebaut, so dass nur das jeweilige Endelement mit einem Stromanschluss versehen wird. Bipolare Anordnung bedeutet, dass eine Anodenhalbschale mit einer Kathodenhalbschale in Kontakt steht. Der Kontakt erfolgt dabei über die metallische Rückwand der Halbschalen. Eine monopolare Anordnung ist ebenfalls denkbar, hier verfügt jedes Element über einen separaten Stromanschluss, die Anodenhalbschale wird mit dem Pluspol des Gleichrichters und die Kathodenhalbschale mit dem Minuspol des Gleichrichters verbunden.

Im Rahmen einer bevorzugten Ausführungsform ist die Elektrolysevorrichtung in der Lage, den Katholyten zu temperieren, insbesondere auf mindestens 60°C, bevorzugt mindestens 70°C, zu temperieren. Somit ist eine Elektrolysevorrichtung bevorzugt, in der der Katholytzulauf mindestens einen Wärmetauscher zur Temperierung des der mindestens einen Elektrolysezelle zuzuführenden Katholyten umfasst.

Der Anodenhalbschale wird als Elektrolyt (Anolyt) eine wässrige Alkalichlorid-haltige Lösung zugeführt. In der Anodenhalbschale wird aus der wässrigen Alkalichloridlösung Chlor erzeugt. Als Nebenreaktion kann an der Anode neben dem Chlor eine geringe Menge an Sauerstoff gebildet werden.

Der pH-Wert der Alkalichlorid-Lösung, die der Anodenhalbschale zugeführt wird, beträgt dabei mehr als pH 1,5.

Als Alkalichlorid ist im Anolyten bevorzugt mindestens ein Alkalichlorid ausgewählt aus der Reihe: Caesiumchlorid, Natriumchlorid oder Kaliumchlorid, besonders bevorzugt ausgewählt aus Natrium- oder Kaliumchlorid enthalten. Ganz besonders bevorzugt ist Kaliumchlorid im Anolyt enthalten.

Eine weitere bevorzugte Ausführung des neuen Verfahren ist dadurch gekennzeichnet, dass die Konzentration der wässrigen Alkalichloridlösung des Anolyten bis 25 Gew.-%, bevorzugt von 15 bis 25 Gew.-% beträgt. Ganz besonders bevorzugt beträgt die Konzentration an Kaliumchlorid der wässrigen Alkalichloridlösung des Anolyten bis 25 Gew.-%, bevorzugt von 15 bis 25 Gew.-%,.Das Chlorgas, welches noch Sauerstoff und Wasserdampf enthält, wird einer Trocknung, z.B. durch eine Schwefelsäuretrocknung, und anschließend, je nach Sauerstoffgehalt im Chlor, einer Chlor-Gasabtrennung zugeführt. Dies kann beispielsweise durch eine, insbesondere rekuperative, Verflüssigung des Chlorgases erfolgen. Demgemäß kann das Chlorgas verdichtet und verflüssigt werden, oder einer chemischen Synthese zugeführt werden. Ein Teil des Chlors wird der Synthese von Phosgen zugeführt, das für die Isocyanat-Herstellung eingesetzt wird.

Der Anolyt wird nach dem Ausgang aus der Elektrolyse von aktivem Chlor, d.h. Chlor der Oxidationstufe größer Null befreit. Dies kann durch eine Vakuumentchlorung und/oder eine chemische Entchlorung z.B. durch Zugabe von einer Alkalihaltigen Bisulfit-Lösung oder von Wasserstoffperoxid erfolgen. Nach der Entchlorung sollte der aktive Chlorgehalt des Anolyts insbesondere kleiner 20 ppm betragen. Der so behandelte Anolyt kann mit dem von CO und H₂ befreiten Katholyten vereinigt werden. Dies kann wahlweise vor oder nach der Alkalicarbonatzersetzung erfolgen.

Wird Bisulfit zur Entchlorung eingesetzt, so reichert sich Kaliumsulfat im Elektrolyten an. Durch eine teilweise Ausschleusung von Elektrolyt aus dem gesamten Elektrolytkreislauf kann in bevorzugter Weise der Kaliumsulfatgehalt im Elektrolyten konstant gehalten werden. Bevorzugt wird ein max. Konzentration an Kaliumsulfat im Elektrolyten von 10 g/L nicht überschritten.

Anoden- und Kathodenhalbschale werden durch einen Separator, bevorzugt durch eine Ionenaustauschermembran, voneinander getrennt. Hierbei können handelsübliche, perfluorierte Ionenaustauschermembranen (wie Membranen des Typs Asahi Glass F8080 der Fa. Asahi oder Chemours N2050 der Fa. Chemours) eingesetzt werden. Hierdurch wird vermieden, dass das erzeugte Chlor an der Kathode wieder reduziert wird und ggf. an der Kathode erzeugtes Kohlenmonoxid an der Anode oxidiert wird. Ebenfalls wird dabei die Vermischung von Chlor mit Wasserstoff oder Kohlenstoffmonoxid vermieden, welchen aus sicherheitstechnischen Gründen notwendig ist.

In der Kathodenhalbschale wird aus CO₂ an einer Gasdiffusionselektrode Kohlenmonoxid bzw. eine Mischung aus Kohlenmonoxid und Wasserstoff hergestellt, wobei zusätzlich Hydroxid-Ionen erzeugt werden. Die Hydroxid-Ionen reagieren dabei mit überschüssigem CO₂ zu Carbonationen, und bei Gegenwart von Alkaliionen zu Alkalicarbonat und/oder Alkalihydrogencarbonat.

Der Katholyt wird über die Sammelrohrleitung zu einer Gasabtrennung geführt, in der ggf. gelöstes oder dispergiertes CO oder CO/H₂ Gasgemisch aus der Umsetzung von CO₂ abgetrennt wird. Die Abtrennung kann z.B. über eine Strippkolonne mit Hilfe eines Inertgases erfolgen. Das gestrippte Gasgemisch wird einer Verbrennung zugeführt. Der gereinigte Katholyt wird einer Elektrolytsammelvorrichtung oder direkt einer Alkalicarbonatzersetzungseinheit zugeführt.

Als Katholyt wird hierbei ebenfalls eine wässrige Lösung eines Alkalichlorids eingesetzt. Vorzugsweise ist das Alkalichlorid welches der Anodenhalbschale und der Kathodenhalbschale zugeführt wird identisch. Es können Natrium-, Kalium- oder Caesiumchlorid oder deren Mischungen eingesetzt werden. Bevorzugt ist Natrium oder Kaliumchlorid, besonders bevorzugt Kaliumchlorid.

Besonders bevorzugt beträgt die Konzentration der Alkalichloridlösung des Anolyten und/oder des Katholyten unabhängig voneinander bis 25 Gew.-%, bevorzugt von 15 bis 25 Gew.-%.

Nach der Trennung des aus der Kathodenhalbschale entnommenen Gasgemisches aus Kohlenmonoxid / gegebenenfalls Wasserstoff / Kohlendioxid wird das Kohlenmonoxid und das anodisch erzeugte Chlor vorzugsweise einer Phosgensynthese zugeführt. Das dabei erzeugte Phosgen wird für die Herstellung von Isocyanaten eingesetzt, wobei es mit dem entsprechenden Amin zur Reaktion gebracht wird. Erfolgt die Herstellung des Amins aus einer Nitroverbindung, kann zu dessen Reduktion der gegebenenfalls in der Elektrolyse erzeugte und abgetrennte Wasserstoff eingesetzt werden.

Das bei der Isocyanat-Herstellung anfallende HCl-Gas entsteht gemäß folgendem exemplarischen Formelumsatz 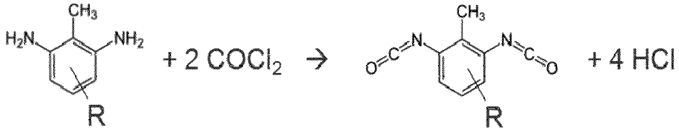 und wird insbesondere der Alkalicarbonat-Zersetzungseinheit zugeführt. Hierin wird das in der Kathodenhalbschale aus Hydroxid-Ionen und dem CO₂ gebildete Alkalicarbonat ggf. auch Alkalihydrogencarbonat mit HCl zu Alkalichlorid, Wasser und CO₂ umgesetzt. Das CO₂ wird dann der Verteilerrohrleitung für CO₂ zugeführt. Die verbleibende Lösung wird einer Elektrolytsammelvorrichtung zugeführt und dort mit dem entchlorten Anolyten vereinigt.

Die Konzentration der vereinigten Lösung kann durch Zugabe von Wasser oder Alkalichloridsalz oder durch verdünnte oder konzentrierte Lösungen von Alkalichlorid eingestellt werden und anschließend in den Anolyt und den Katholytzulauf zur Elektrolysezelle zurückgeführt werden.

Die Beschickung der Anoden- bzw. Kathodenhalbschale erfolgt dabei zweckmäßigerweise über Verteilerrohrleitungen jeweils für den Anolyten und Katholyten.

Der Anolyt wird aus der Anodenhalbschale in eine oder mehrere Sammelrohrleitungen geführt, wobei auch das erzeugte Chlor in die Sammelrohrleitungen eingeleitet werden kann. In der Sammelrohrleitung erfolgt eine Trennung von Gas und Elektrolyt.

Die zuvor für das erfindungsgemäße Verfahren beschriebenen, bevorzugten Ausführungsformen der in dem Verfahren genutzten Merkmale der Elektrolysevorrichtung gelten auch einzeln oder in beliebiger Kombination als bevorzugte Merkmale für bevorzugte Ausführungsformen der erfindungsgemäßen Elektrolysevorrichtung.

Die zuvor als bevorzugt beschriebenen Ausführungsformen der Merkmale der erfindungsgemäßen Elektrolysevorrichtung gelten ebenso einzeln oder in beliebiger Kombination als in dem zuvor beschriebenen erfindungsgemäßen Verfahren als bevorzugt einsetzbare Ausführungsformen.

Die Erfindung wird nachstehend anhand der Figuren beispielhaft näher erläutert.

Es zeigen:
Fig. 1 eine schematische Übersicht über das Gesamtverfahren und über die zur Durchführung brauchbaren Elemente der Elektrolysevorrichtung
Fig. 2 einen schematischen vertikalen Querschnitt durch eine Elektrolysezelle Z der Elektrolysevorrichtung

In den Figuren haben die Bezugszeichen die nachstehende Bedeutung:
- Z: Elektrolysezelle
- 1: Kathodenhalbschale
- 2: Anodenhalbschale
- 3: Separator (Diaphragma, Ionenaustauschermembran)
- 4: Gasraum (Kathode)
- 5: erste Gaszuleitung für Kohlendioxid (Kathodenraum)
- 6: erste Gasableitung für gasförmige Reaktionsprodukte (Kathodenraum)
- 7: zweite Gasableitung für Anodenreaktionsprodukt
- 8: Anolytzulauf
- 9: Chlorhaltiger Anolytablauf zur Gassammelrohrleitung 20
- 10: Anode
- 11: Kathode (Gasdiffusionselektrode)
- 12: Katholytraum (Elektrolytraum)
- 12a: Katholytspalt (Elektrolytraum)
- 13: Katholytzulauf
- 14: Katholytablauf
- 14a: CO / H₂ haltiger Katholytablauf aus Sammelrohrleitung Katholyt 65 zur Gasabtrennungseinheit 66
- 15: Anodenraum
- 15a: Anolyt
- 16: Kathodenraum
- 17: Katholyt
- 18: Zuleitung von Wasser oder konzentrierten oder verdünnten Elektrolyt zur Konzentrationseinstellung
- 18a: Elektrolyt Ausschleusung
- 20: Sammelrohrleitung Anolyt & Cl₂-Gasgemisch
- 22: Cl₂ Gas Trocknung
- 23: Anolyt-Entchlorung
- 24: Strömungsbremse
- 25: Cl₂-O₂ Gastrenneinheit
- 25a: gereinigtes Cl₂ Gas
- 25b: Restgas Cl₂/O₂
- 31: Stromleitung Kathode
- 32: Stromleitung Anode
- 34: Verteilerkanal
- 35: elektrisch leitende Auflagestruktur
- 36: Elastische elektrisch leitende Verbindung zwischen GDE 11 und Auflagestruktur 35
- 38: Carbonatzersetzungseinheit
- 38a: Leitung für CO₂ Strom aus Carbonatzersetzungseinheit
- 38b: Rückführungsleitung für Alkalichlorid-Lösung aus der Carbonatzersetzungseinheit
- 40: Verteilerrohrleitung Anolyt
- 42: Wärmetauscher Anolyt
- 44: Verteilerrohrleitung für CO₂

- 46: Zudosierung von Säure oder Base zur pH-Einstellung des Anolyts
- 50: Verteilerrohrleitung Katholyt
- 53: Rückführungsleitung für abgetrenntes Kohlendioxidgas
- 54: Wärmetauscher Katholyt
- 55: Kohlendioxidgasquelle
- 56: Zudosierung von Säure oder Base zur pH-Einstellung Katholyt
- 60: Isocyanat-Herstellung
- 61: Phosgen-Synthese
- 62: Zuleitung HCl Gas
- 65: Sammelrohrleitung Katholyt
- 66: Gasabtrenneinheit CO/H₂
- 66a: abgetrenntes Gas CO/H₂ aus der Katholyt Gasabtrenneinheit 66
- 66b: gereinigter Katholyt
- 67: Elektrolytsammelvorrichtung
- 68: Sammelrohrleitung CO/ CO₂/H₂ Gasgemisch
- 68a: Mischung aus CO₂, CO, H₂
- 69: CO₂ Gasabtrennung zur Trennung von CO₂, H₂ und nicht umgesetzten CO₂
- 70: CO / H₂ Gastrennung
- 70a: Kohlenmonoxid Gas
- 70b: Wasserstoff-Gas
- 90: elektrisch leitende Verbindung Anode mit Anodenhalbschale
- 91: elektrisch leitende Verbindung von GDE 11, elastischer Struktur 36, elektrisch leitender Auflagestruktur 35 mit der Kathodenhalbschale 1
- 100: Elektrolyseur mit Elektrolysezellen Z (n), n = Anzahl der Elektrolysezellen Z

### Beispiele

### Allgemeinere beispielhafte Beschreibung des Verfahrens und der Elektrolysevorrichtung

Ein Elektrolyseur 100 wird mit einer Anzahl von 30 bis 100 Elektrolysezellen (Z) - nachstehend auch vereinfacht Elektrolysezellen genannt - je Elektrolyseurgestell ausgerüstet. Eine Elektrolysezelle Z (Fig. 2) besteht dabei aus einer Anodenhalbschale 2 und einer Kathodenhalbschale 1 und diese sind jeweils durch eine Ionenaustauschermembran 3 voneinander getrennt. Die Anodenhalbschale 2 ist mit einer Anode 10 ausgerüstet, die ein handelsübliches Coating auf Basis eines Mischoxides von Ruthenium und Iridium zur Chlor-Herstellung besitzt (DSA-Coating, Denora Deutschland). Die Kathode 11 ist als Silber/PTFE-basierte Gasdiffusionselektrode der Fa. Covestro Deutschland AG ausgerüstet. Die Gasdiffusionselektrode 11 trennt den Gasraum 4 von einem Elektrolytraum 12. Der Elektrolytraum 12 wird begrenzt von der Gasdiffusionselektrode 11 und der Ionenaustauschermembran 3, und bildet einen Spalt 12a. Der Spalt 12a ist mit einem PTFE-basierten Gewebe 24 gefüllt, welches als Strömungsbreme für den Katholyt 17 dient, der von oben nach unten durch den mit dem Gewebe 24 gefüllten Spalt 12a fließt. Der Katholyt 17 sammelt sich am Boden der Kathodenhalbschale 1 und verlässt diese über eine vorzugsweise flexible Rohrverbindung und wird einer Sammelrohrleitung (Katholyt) 65 zugeführt. Um zu vermeiden, dass Gase die Kathodenhalbschale über die Rohrverbindung verlassen, wird die Rohrverbindung so ausgeführt, dass diese getaucht in die Sammelrohrleitung (Katholyt) 65 geführt wird.

Anodenhalbschale 2 und Kathodenhalbschale 1 werden durch einen Separator 3, eine Ionenaustauschermembran 3 voneinander getrennt. Hierbei können handelsübliche, perfluorierte Ionenaustauschermembranen des Typs Asahi Glass F8080 (Hersteller Asahi Glass) oder Chemours N2050 (Hersteller Chemours) eingesetzt werden. Hierdurch wird vermieden, dass das erzeugte Chlor an der Kathode 11 wieder reduziert wird und ggf. an der Kathode erzeugtes Kohlenmonoxid an der Anode 10 oxidiert wird. Ebenfalls wird dabei die Vermischung von Chlor mit Wasserstoff oder CO vermieden, welches aus sicherheitstechnischen Gründen (Explosionsgefahr Chlorwasserstoffknallgas) notwendig ist.

Der elektrische Kontakt bei einer monopolaren Verschaltung der Elektrolyseelemente zu einer Gleichspannungsquelle (nicht gezeichnet) erfolgt von der Anode 10 über eine elektrisch leitende Verbindung 90 zur Anodenhalbschale 2 und von der Anodenhalbschale 2 über eine Anoden-Stromleitung 32. Von der Kathode 11 erfolgt der elektrische Kontakt über eine elastische elektrisch leitende Matte 36 weiter über eine elektrisch leitende Auflagestruktur 35 weiter über eine elektrisch leitende Verbindung 91 zur Kathodenhalbschale 1 und von dieser zur Gleichspannungsquelle. Dem Gasraum 4 der Kathodenhalbschale 1 wird über eine Verteilerrohrleitung 44 CO₂ (siehe Fig. 1) zugeführt; und dann nicht umgesetztes CO₂ sowie die Reaktionsprodukte aus der Kathodenhalbschale 1 über eine vorzugsweise flexible Verbindung angeschlossen an Auslass 6 einer Sammelrohrleitung 68 für CO/CO₂-Gasgemisch zugeführt.

Der Katholyt 14a der Sammelrohrleitung (Katholyt) 65 wird einer Gasabtrenneinheit CO₂/CO/H₂ 66 zugeführt, um die noch gelösten bzw. dispergierten Gase wie CO₂, CO und ggf. H₂ vom Katholyt 14a abzutrennen. Die Abtrennung kann z.B. über eine Strippkolonne mit Hilfe eines Inertgases erfolgen. Das gestrippte Gasgemisch 66a (Restgas) wird beispielsweise einer Verbrennung zugeführt. Der gereinigte Katholyt 66b wird einer Elektrolytsammelvorrichtung 67 oder direkt einer Carbonatzersetzungseinheit 38 zugeführt.

Das dem Gasraum 4 der Kathodenhalbschale 1 entnommene Gasgemisch wird einer Sammelrohrleitung für CO₂/CO/H₂-Gasgemisch 68 zugeführt. Anschließend wird aus dem GasGemisch überschüssiges bzw. nicht umgesetztes CO₂ abgetrennt (CO₂ Abtrennung 69). Dies kann z.B. durch eine Aminwäsche erfolgen. Das abgetrennte CO₂ Gas wird durch die Rückführungsleitung 53 dem Gasraum 4 der Kathodenhalbschale 1 wieder über die Verteilerrohrleitung CO₂ 44 zugeführt. Hierbei wird das umgesetzte CO₂ durch entsprechende Menge an frischem CO₂ aus einer Kohlendioxidgasquelle 55 ergänzt.

Der Anodenhalbschale 2 wird der Anolyt 15a über eine Verteilerrohrleitung (Anolyt) 40 zugeführt. In der Anodenhalbschale 2 wird an der Anode 10 aus einer wässrigen Alkalichloridlösung Chlor erzeugt. Als Nebenreaktion kann an der Anode neben dem Chlor eine geringe Menge Sauerstoff gebildet werden. Der Anodenhalbschale 2 wird die Mischung aus Cl₂, ggf. O₂ und dem Anolyten über die Auslässe 7 und 9 entnommen und einer Sammelrohrleitung Anolyt & Cl₂-Gasgemisch 20 zugeführt. Der Sammelrohrleitung 20 wird das Cl₂ entnommen, welches noch Sauerstoff und Wasserdampf enthält und einer Cl₂-Trocknung 22 z.B. durch eine Schwefelsäuretrocknung zugeführt. Je nach geforderter Reinheit des Chlors ist eine weitere optionale Reinigung nachgeschaltet. So kann das Cl₂ der Cl₂-Gastrenneinheit 25 zugeführt werden, um Reste 25b von O₂ mit Spuren von Chlor abzutrennen. Dies kann beispielsweise durch eine rekuperative Verflüssigung erfolgen. Hiernach kann das Chlor verdichtet und/oder verflüssigt werden, und/oder einer chemischen Synthese zugeführt werden (z.B. Phosgensynthese 61).

Ein Teil des abgetrennten Cl₂ 25a wird so der Phosgensynthese 61 als Vorstufe zu einer Isocyanatherstellung 60 zugeführt.

Der gereinigte Anolyt der Sammelrohrleitung 20 wird einer Entchlorungseinheit 23 zur Entfernung von Verbindungen, in denen Chlor in der Oxidationsstufe größer Null vorliegt (aktives Chlor) zugeführt. Dies kann wahlweise durch eine Vakuumentchlorung und/oder eine chemischen Entchlorung durch Zugabe von einer alkalihaltigen Bisulfit-Lösung oder durch Zugabe von Wasserstoffperoxid erfolgen. Nach der Entchlorung sollte der aktive Chlorgehalt des Anolyts bevorzugt kleiner 20 ppm betragen.

Der entchlorte Anolyt wird der Elektrolytsammelvorrichtung 67 zugeführt. Die gesammelten Elektrolyte in der Elektrolytsammelvorrichtung enthalten neben dem Alkalichlorid noch das gebildete Alkalihydrogencarbonat bzw. -carbonat und wird der Carbonatzersetzungseinheit 38 zugeführt. Der Carbonatzersetzungseinheit 38 wird Chlorwasserstoff 62 aus der Isocyanat-Herstellung 60 zugeführt, wobei der Chlorwasserstoff 62 mit dem im Elektrolyt vorliegenden Alkali-Carbonat bzw. Alkali-Hydrogencarbonat zu Alkalichlorid, Wasser und CO₂ reagiert. Ggf. kann ein stöchiometrischer Überschuss an Chlorwasserstoff 62 zugegeben werden. Das abgetrennte CO₂ wird mit dem aus der CO₂ Abtrennung, der Aminwäsche 69 und dem zu ergänzenden CO₂ aus einer Kohlendioxidgasquelle 55 über die Verteilerrohrleitung CO₂ 44 wieder dem Gasraum 4 der Kathodenhalbschale zugeführt.

Der Elektrolyt aus der Carbonatzersetzungseinheit 38 wird der Anodenhalbschale 2 nach pH-Einstellung mittels Mineralsäure/Laugenzuleitung 46, Aufheizen in dem Wärmetauscher 42 über die Verteilerrohrleitung 40 wieder zugeführt. Die Temperatur des der Anodenhalbschale zugeführten Elektrolyten beträgt nach dem Wärmetauscher mehr als 50°C. Der pH Wert der der Anodenhalbschale zugeführten Alkalichlorid-Lösung beträgt dabei zwischen 2 und 8, die Konzentration an Alkalichlorid beträgt 14 Gew.-% bis 23 Gew.-%
Weiterhin wird der Elektrolyt aus der CO₂ Carbonatzersetzungseinheit 38 der Kathodenhalbschale 1 über eine pH-Einstellung mittels Mineralsäure-/Laugenzuleitung 56 und einem Wärmetauscher 54 über den Verteilerkanal (Katholyt) 50 wieder zugeführt. Der pH Wert des der Kathodenhalbschale 1 zugeführten Elektrolyten beträgt zwischen 6 und 14, die Temperatur beträgt größer als 50°C. Die Konzentration an Alkalichlorid entspricht dem der der Anodenhalbschale zugeführten Elektrolyten.

Das erzeugte Phosgen aus der Phosgensynthese 61 wird für die Herstellung von Isocyanaten 60 eingesetzt, wobei es mit einem entsprechenden z.B. aromatischen Amin zur Reaktion gebracht wird. Erfolgt die Herstellung des Amins aus einer aromatischen Nitroverbindung, kann zu dessen Reduktion der erzeugte und in der CO / H₂ Gastrennung 70 abgetrennte Wasserstoff 70b eingesetzt werden.

Ein Teil des bei der Isocyanat-Herstellung 60 anfallenden HCl-Gases wird der CarbonatZersetzungseinheit 38 zugeführt. Hier wird das in der Kathodenhalbschale durch die gebildeten Hydroxid-Ionen und CO₂ gebildete Alkalicarbonat, ggf. auch Alkalihydrogencarbonat zu Alkalichlorid, Wasser und CO₂ umgesetzt. Das CO₂ wird dabei der Verteilerrohrleitung-CO₂ 44 zugeführt.

Die Konzentration von Anolyt und Katholyt kann durch Zugabe von Wasser oder Alkalichloridsalz oder durch verdünnte oder konzentrierte Salz-Lösungen 18 eingestellt werden. Zur Vermeidung der Akkumulation von Verunreinigungen oder von Sulfat, welches bei der Entchlorung durch Zugabe von Bisulfit in der Anolyt-Entchlorung 23 entsteht, kann ein Teil des Elektrolyten entsorgt werden Die erfolgt über eine Entsorgungsleitung 18a.

### Beispiel (erfindungsgemäß)

Eine Elektrolysezelle Z (siehe Fig. 2) mit einer Fläche von 2,5m², aufgebaut aus einer Anodenhalbschale 2 und einer Kathodenhalbschale 1, werden durch eine Ionenaustauschermembran 3 des Typ Nafion 982 WX getrennt.

Die Anode 10 besteht aus einem Titan Streckmetall mit einer üblichen, für die Chlor-Herstellung ausgerüstetem Beschichtung (mit Ru / Ir-Mischoxid) zur Chlor-Herstellung der Fa. Denora (DSA-Caoting).

Die Kathode, eine Gasdiffusionselektrode (GDE) 11, ist nach dem Prinzip der Fallfilmzellentechnik in die Zelle Z senkrecht eingebaut, bei dem die GDE 11 auf einem elastisch gelagerten stromführenden Element 36 aufliegt, das sich wiederum auf einer elektrisch leitenden Auflagestruktur 35 mit Öffnungen für den Gaszutritt abstützt. Die GDE 11 ist eine silber- und PTFE basierte GDE auf einem Silber-Metallnetz. der Fa. Covestro Deutschland AG (entsprechend Offenlegungsschrift EP1728896A2) für die Chlor-Alkali-Elektrolyse. Zwischen GDE 11 und Membran 3 wurde ein PTFE-basiertes flächiges Gewebe 24 als Strömungsbremse eingesetzt, die vom Katholyt 17 von oben nach unten im freien Fall durchströmt wird.

Die Stromdichte im Elektrolysebetrieb beträgt 3 kA/m².

Dem Anodenraum 15 wird dabei über ein Verteilerrohr 40 229,02 kg/h eines Elektrolyten (Anolyt 15a) bestehend aus 2,68 kg/h K₂SO₄, 45,8 kg/h KCl und 180,5 kg/h Wasser mit einem pH 7 und einer Temperatur von 80°C zugeführt. Zusätzlich stellt sich durch die unten beschriebene chemische Entchlorung im stationären Betrieb des Verfahrens noch ein Anteil von 2,68 kg/h K₂SO₄ im Anolyt 15a ein.

Dem Anodenraum 15 werden über den Auslass 9 9,92 kg/h Cl₂ und 0,58 kg/h O₂ sowie 193,05 kg/h Elektrolyt mit 24,9 kg/h KCl, 10,4 g/h aktivem Chlor sowie 165,4 kg/h H₂O und im stationären Betrieb 2,68 kg/h K₂SO₄ entnommen und der Sammelrohrleitung 20 zugeführt.

Der dem Anodenraum 15 entnommene Elektrolyt (gebrauchter Anolyt) hat einen pH Wert von 3,5 und wird einer Anolytentchlorung 23, die in einer ersten Stufe aus einer Vakuumentchlorung besteht, zugeführt, durch die 10,3 g des gebildeten Cl₂ entfernt werden. Der so behandelte gebrauchte Anolyt wird einer zweiten Stufe der Anolytentchlorung 23 zugeführt und hierbei auf einen pH von 9 durch Zugabe von 19 g einer 18 Gew.-%igen Kalilauge und anschließend einer chemischen Entchlorung zugeführt, bei der dem Anolyten 0,5 g einer 38 Gew.-%igen KHSO₃ Lösung zugegeben wird.

Zur Vermeidung der Akkumulation von K₂SO₄, das bei der chemischen Entchlorung des Anolyts gebildet wird, werden 74,5 g /h des behandelten Anolyten ausgeschleust (Leitung 18a) und verworfen.

Nach der chemischen Entchlorung wird der pH Wert des behandelten Anolyten auf 3,5 erniedrigt, durch Zugabe von 13,4 g einer 18 Gew. % igen Salzsäure.

Der so behandelte Anolyt kann einem Lagerbehälter, Elektrolytsammelvorrichtung 67 zugeführt werden oder direkt der Carbonatzersetzungseinheit 38 zugeführt werden.

Dem Kathodenraum 16 der Elektrolysezelle Z werden 618 kg/h eines Katholyten 17, mit einer Temperatur von 72°C bestehend aus 7,25 kg/h K₂SO₄, 123,6 kg/h KCl sowie 487,15 kg/h H₂O zugeführt. Dem Gasraum 4 in der Kathodenhalbschale 1 werden 30,34 kg/h CO₂ zugeführt.

Dem Kathodenraum 16 wird 651,6 kg/h Katholyt bestehend aus 123,6 kg/h KCl, 19,3 kg/h K₂CO₃, 7,25 kg/h K₂SO₄ und 501,4 kg/h Wasser entnommen. Der auslaufende Katholyt hatte eine Temperatur von 87,3°C.

Weiterhin wird dem Gasraum 4 in der Kathodenhalbschale 1 22,75 kg/h Gas bestehend aus 2,66 kg/h CO, 0,09 kg/h H₂ sowie 20 kg/h CO₂ entnommen.

Der kathodische Umsatz von CO₂ zu CO betrug 68%.

Das anodisch erzeugte Cl₂ (9,92 kg/h) wurde nach Trocknung 22 und Entfernung 25 von O₂ zusammen mit dem erzeugten und getrockneten CO sowie weiterem CO zu Phosgen umgesetzt und einer Isocyanat-Herstellung 60 zugeführt.

Das aus der Isocyanat-Herstellung 60 abgetrennte HCl-Gas 62 wurde der Carbonatzersetzungseinheit 38 zugeführt (10,2 kg/h).

## Patentansprüche

1. Verfahren zu Herstellung von Kohlenmonoxid, ggf. Wasserstoff und Chlor durch elektrochemische Umsetzung von Kohlendioxid und Alkalichloridlösung, **dadurch gekennzeichnet, dass** das Kohlendioxid an einer Gasdiffusionselektrode als Kathode (11) in einer wässrigen Alkalichlorid-haltigen Lösung als Katholyt (17) elektrochemisch reduziert und gleichzeitig Chlor aus einer wässrigen Alkalichlorid-haltigen Lösung als Anolyt (15a) anodisch erzeugt wird, wobei das im Katholyt (17) gebildete Alkalisalz der Kohlensäure, ausgewählt aus Alkalicarbonat, Alkalihydrogencarbonat oder Mischungen daraus anschließend mit Chlorwasserstoff (62) zu Kohlendioxid (38a) und Alkalichlorid (38b) umgesetzt wird und das hierbei freigesetzte Kohlendioxid (38a) in den Kathodenraum (16) zur Gasdiffusionselektrode (11) und das erzeugte Alkalichlorid (38b) wahlweise in den Anodenraum (15) und/oder in den Kathodenraum (16) zurückgeführt werden.

2. Verfahren gemäß Anspruch 1, **dadurch gekennzeichnet, dass** der Chlorwasserstoff (62) einem angeschlossenen Prozess (60) zur Herstellung von Isocyanaten über Phosgen als Zwischenprodukt entnommen wird und das bei der elektrochemischen Umsetzung gebildete Chlor (25a) in die Phosgenerzeugung (61) als Vorstufe zur Isocyanatproduktion (60) zurückgeführt wird.

3. Verfahren gemäß einem der Ansprüche 1 bis 2, **dadurch gekennzeichnet, dass** der als optionales Nebenprodukt der elektrochemischen Umsetzung zusammen mit CO gebildete Wasserstoff (70b) von der Mischung (68a) aus Wasserstoff, CO und CO₂ abgetrennt und verwertet wird.

4. Verfahren gemäß Anspruch 3, **dadurch gekennzeichnet, dass** der Wasserstoff (70b) zur Herstellung von Diaminen als Vorstufe für den Isocyanatherstellungsprozess (60) verwertet wird.

5. Verfahren gemäß einem der Ansprüche 1 bis 4, **dadurch gekennzeichnet, dass** als Alkalichlorid für Anolyt und Katholyt Kaliumchlorid eingesetzt wird.

6. Verfahren gemäß einem der Ansprüche 1 bis 5, **dadurch gekennzeichnet, dass** Konzentration der Alkalichloridlösung des Anolyten (15a) und/oder des Katholyten (17) unabhängig voneinander bis 25 Gew.-%, bevorzugt von 15 bis 25 Gew.-% beträgt.

7. Verfahren gemäß einem der Ansprüche 1 bis 6, **dadurch gekennzeichnet, dass** die Temperatur des Katholyten (17) im Zulauf zur elektrochemischen Umsetzung mindestens 60°C, insbesondere vorzugweise mindestens 70°C beträgt.

8. Verfahren gemäß einem der Ansprüche 1 bis 7, **dadurch gekennzeichnet, dass** die elektrochemische Umsetzung von CO₂ im technischen Maßstab nach dem Membranelektrolyseverfahren an einer Gasdiffusionselektrode als Kathode durchgeführt wird

9. Verfahren gemäß einem der Ansprüche 1 bis 8, **dadurch gekennzeichnet, dass** die Zuleitung des CO₂ zur Gasdiffusionselektrode (11) über einen Gasraum (4) erfolgt, der durch die Gasdiffusionselektrode (11) vom Elektrolytraum (12) abgetrennt ist.

10. Verfahren gemäß Anspruch 9, **dadurch gekennzeichnet, dass** Gasgeschwindigkeit im Gasraum (4) nahe der Rückseite der Gasdiffusionselektrode (11) von 0,001 bis 15 m/s, bevorzugt von 0,01 bis 10 m/s beträgt.

11. Verfahren gemäß einem der Ansprüche 8 bis 10, **dadurch gekennzeichnet, dass** die Driftgeschwindigkeit des Katholyts (17) im Zwischenraum (12) zwischen Ionenaustauschermembran (3) und Gasdiffusionselektrode (11) von 0,8 bis 10 cm/s beträgt.

12. Elektrolysevorrichtung zur elektrochemischen Umsetzung von Kohlendioxid und Alkalichloridlösung, insbesondere nach einem Verfahren gemäß einem der Ansprüche 1 bis 11, mindestens umfassend
(i) mindestens eine Kohlendioxidgasquelle (55) und
(ii) mindestens eine Elektrolysezelle (Z), wenigstens umfassend
eine Kathodenhalbschale (1) mit einer Kathode (11), einem Katholytzulauf (13), einem Katholytablauf (14) und mit einem Gasraum (4), der über eine erste Gaszuleitung (5) mit der Kohlendioxidgasquelle (55) in Fluidverbindung steht, und der mit einer ersten Gasableitung (6) für gasförmiges Reaktionsprodukt enthaltendes Gas, verbunden ist,
weiter umfassend eine Anodenhalbschale (2), wobei die Anodenhalbschale (2) mindestens mit einer zweiten Gasableitung (7) für das Anodenreaktionspodukt, insbesondere Chlor und gegebenenfalls Sauerstoff, einem Anolytzulauf (8) für die Einleitung einer wässrigen Alkalichlorid-haltigen Lösung als Anolyt (15a) und einem Anolytablauf (9), sowie einer Anode (10) versehen ist, und
einen zwischen Anodenhalbschale (2) und Kathodenhalbschale (1) angeordneten Separator (3) zur Trennung von Anodenraum (15) und Kathodenraum (16),
weiter umfassend elektrische Stromleitungen (31, 32) zur Verbindung von Anode (10) und Kathode (11) mit einer Gleichspannungsquelle,
wobei die Kathode (11) als Gasdiffusionselektrode zur Umsetzung von Kohlendioxidgas ausgebildet ist und Kathode (11), Anode (10) und der Separator (3) mit ihrer Hauptausdehnung vertikal angeordnet sind, und zwischen Separator (3) und Kathode (11) ein Spalt (12a) als Elektrolytraum zur Durchleitung des Katholyts (17) nach dem Prinzip eines fallenden Flüssigkeitsfilms angeordnet ist.

13. Elektrolysevorrichtung gemäß Anspruch 12, **dadurch gekennzeichnet, dass** der Separator (3) eine Ionenaustauschermembran oder ein Diaphragma, bevorzugt eine Ionenaustauschermembran ist.

14. Elektrolysevorrichtung gemäß Anspruch 12 oder 13, **dadurch gekennzeichnet, dass** die vertikale Hauptausdehnung der Kathode (11) mindestens 30 cm, bevorzugt mindestens 60 cm, besonders bevorzugt mindestens 100 cm beträgt.

15. Elektrolysevorrichtung gemäß wenigstens einem der Ansprüche 12 bis 14, **dadurch gekennzeichnet, dass** die Kathode (11) als Gasdiffusionselektrode auf Basis von Silber und/oder Silberoxid, bevorzugt Silberpartikeln, als Elektrokatalysator und mit einem pulverförmigen Fluorpolymer, insbesondere PTFE Pulver, als nichtleitendem Bindemittel auf einem metallischen oder nichtmetallischen, leitfähigen oder nichtleitfähigen Träger kompaktiert ausgebildet ist.

16. Elektrolysevorrichtung gemäß wenigstens einem der Ansprüche 12 bis 15, **dadurch gekennzeichnet, dass** die erste Gasableitung (6) am oberen Ende des Gasraums (4) und die zweite Gasableitung (7) am oberen Ende des Anodenraums (15) angeschlossen sind und die erste Gaszuleitung (5) am unteren Ende des Gasraums (4) angeschlossen ist.

17. Elektrolysevorrichtung gemäß wenigstens einem der Ansprüche 12 bis 16, **dadurch gekennzeichnet, dass** die zweite Gasableitung (7) für das Anodenreaktionsprodukt mit einer zweiten Gastrenneinheit (25) zur Abtrennung von Sauerstoff aus Chlor aus dem Anodengas verbunden ist.

18. Elektrolysevorrichtung gemäß wenigstens einem der Ansprüche 12 bis 17, **dadurch gekennzeichnet, dass** die erste Gasableitung (6), insbesondere über eine Sammelleitung (68), mit einer ersten Gastrenneinheit (69) zur Trennung von Kohlenmonoxid, Wasserstoff und unverbrauchtem Kohlendioxidgas verbunden ist.

19. Elektrolysevorrichtung gemäß Anspruch 18, **dadurch gekennzeichnet, dass** die erste Gastrenneinheit (69) eine Rückführungsleitung (53) für abgetrenntes Kohlendioxidgas aufweist, die insbesondere über eine Verteilerrohrleitung (44) mit der ersten Gaszuleitung (5) für Kohlendioxidgas verbunden ist.

20. Elektrolysevorrichtung gemäß Anspruch 18 oder 19, **dadurch gekennzeichnet, dass** die Gastrenneinheit (70) eine Ableitung für abgetrenntes Kohlenmonoxid aufweist, die mit einer chemischen Produktionsanlage (61) zur chemischen Umsetzung von Kohlenmonoxid und Chlor zu Phosgen (61) verbunden ist.

21. Elektrolysevorrichtung gemäß wenigstens einem der Ansprüche 12 bis 20, **dadurch gekennzeichnet, dass** im Spalt (12a) ein Mittel (24) zur Strömungsbremsung des Katholytstroms vorgesehen ist, wobei bevorzugt das Mittel (24) zur Strömungsbremsung als elektrisch nicht leitendes, chemisch inertes textiles Flächengebilde ausgebildet ist.

22. Elektrolysevorrichtung gemäß wenigstens einem der Ansprüche 12 bis 21, **dadurch gekennzeichnet, dass** der Katholytablauf (14) und der Anolytablauf (9) direkt oder indirekt über Rohrleitungen mit einem Elektrolytsammler (67) verbunden sind, der Elektrolytsammler (67) über Rohrleitung mit einer Carbonatzersetzungseinheit (38) und die Carbonatzersetzungseinheit (38) mindestens mit einer Rückführung (38a) für abgespaltenes Kohlendioxid, einem regelbaren Zulauf (62) für Chlorwasserstoff und einer Rückführungsleitung (38b) für Elektrolyt versehen ist und die Rückführungsleitung (38b) sowohl mit dem Katholytzulauf (13) als auch mit dem Anolytzulauf (8) verbunden ist.
